(19) Europäisches Patentamt

European Patent Office

Office européen des brevets

(11) Veröffentlichungsnummer: **0 322 706 B1**

(12) **EUROPÄISCHE PATENTSCHRIFT**

(45) Veröffentlichungstag der Patentschrift: **17.02.93**

(21) Anmeldenummer: **88121270.8**

(22) Anmeldetag: **20.12.88**

(51) Int. Cl.⁵: **B01D  53/34**, B01D 53/14

Die Akte enthält technische Angaben, die nach dem Eingang der Anmeldung eingereicht wurden und die nicht in dieser Patentschrift enthalten sind.

(54) Verfahren zur Abtrennung von organischen Bestandteilen aus Abgasen der Herstellung von aromatischen Zwischenprodukten.

(30) Priorität: **31.12.87 DE 3744594**
**09.11.88 DE 3837987**

(43) Veröffentlichungstag der Anmeldung:
**05.07.89 Patentblatt  89/27**

(45) Bekanntmachung des Hinweises auf die Patenterteilung:
**17.02.93 Patentblatt  93/07**

(84) Benannte Vertragsstaaten:
**BE CH DE ES FR GB IT LI NL**

(56) Entgegenhaltungen:
**GB-A- 2 061 126**
**US-A- 4 028 072**
**US-A- 4 043 769**

(73) Patentinhaber: **HOECHST AKTIENGESELL-SCHAFT**
**Postfach 80 03 20**
**W-6230 Frankturt am Main 80(DE)**

(72) Erfinder: **Höroldt, Ernst, Dr.**
**Theresenstrasse 33**
**W-6233 Kelkheim Taunus(DE)**
Erfinder: **Grimm, Richard, Dr.**
**Am Erdbeerstein 40**
**W-6240 Königstein Taunus(DE)**
Erfinder: **Rittner, Siegbert, Dr.**
**Kornblumenweg 5**
**W-6082 Mörfelden-Walldorf(DE)**
Erfinder: **Kuckertz, Herbert, Dr.**
**Ludwig-Schäfer-Weg 10**
**W-6233 Kelkheim Taunus(DE)**
Erfinder: **Billmann, Wilfried**
**Autogenstrasse 31**
**W-6230 Frankturt am Main 80(DE)**

**Beschreibung**

Die Erfindung bezieht sich auf ein Verfahren zur Abtrennung von organischen Bestandteilen aus Abgasen, die bei der Herstellung aromatischer Zwischenprodukte mit Hilfe verschiedener Reaktionen wie Kernchlorierungen und -bromierungen, Seitenkettenchlorierungen und -bromierungen, Nitrierungen, Reduktionen, Austauschreaktionen, Oxydationen, Carboxylierungen, Alkylierungen, Kondensationen, Umlagerungen usw. anfallen.

Bei diesen Verfahren fallen Ströme von Abgasen an, deren Zusammensetzung von den Ausgangsstoffen, den gewünschten Produkten und der gewählten Verfahrensweise, z. B. diskontinuierlicher oder kontinuierlicher Arbeitsweise, abhängt. Die Verunreinigungen im Abgas unterscheiden sich also in ihren physikalischen und chemischen Eigenschaften stark voneinander und innerhalb weiter Grenzen. Sie sind Ausgangs-, Reaktions-, Neben- und Zersetzungsprodukte und sind z.B. Methylaromaten, wie Toluol, Xylole, p-tert-Butyltoluol, Chlor-, Brom- und Fluortoluole, Nitrobenzol, Chlor-nitrobenzole, Nitrotoluole, Dinitrobenzole, Chlor-nitrotoluole, Nitroxylole, Chlor-nitroxylole, Nitroanisole, Nitrophenetole, Anisidine, Phenetidine, Brenzkatechin-, Resorcin- und Hydrochinonäther, Chlorhydrochinon- und Chlorresorcinäther, Benzyl-, Benzal- und Benzotrichlorid bzw. -bromid, Chlorbenzyl-, Chlorbenzal- und Chlorbenzotrichloride bzw. -bromide, Chlorfluorbenzalchlorid, Chloroform, Tetrachlorkohlenstoff, Perchloräthylen, Chlorbenzol, Dichlortoluol. Diese nach der technischen Anleitung zur Reinhaltung der Luft (TA-Luft) vom 1.3.86 als Schadstoffe bezeichneten organischen Bestandteile müssen aus dem Abgas entfernt werden, das vielfach zum größten Teil aus Stickstoff besteht, der aus Sicherheitsgründen zur Überlagerung des Reaktionsgemisches als Schutzgas angewendet wird. Ihre Reinigung ist, wie sich aus der Verschiedenartigkeit der abzutrennenden Stoffe ergibt, sehr schwierig und technisch aufwendig.

Zum Abtrennen von schädlichen Stoffen aus Abgasen und zur Rückgewinnung von Lösemitteln daraus werden im allgemeinen physikalische Methoden angewandt. Bekannte Reinigungsverfahren sind Adsorption, Absorption, Nachverbrennung mit oder ohne Katalysatoren und Kondensation durch Tiefkühlung. Dabei kann die Reinigung ein- oder mehrstufig erfolgen und auch aus Kombinationen der genannten Methoden bestehen.

Adsorptionsverfahren werden hauptsächlich diskontinuierlich an Festbett-Adsorbern durchgeführt, wobei mindestens zwei Adsorber aufgestellt werden, die wechselseitig auf Adsorption und Desorption geschaltet werden. So gelingt es zwar mit geeigneten Adsorbentien, z. B. Aktivkohle, die Schadstoffe weitgehendst aus dem Abgas abzutrennen, wenn das zu reinigende Abgas die hohen Qualitätsanforderungen erfüllt, die einen reibungslosen konstanten Reinigungsablauf ermöglichen. Da polymerisierbare und sublimierbare Stoffe, Harzbildner und Stäube die Poren des Adsorbens verstopfen würden, müssen sie zuvor abgeschieden werden.

Das bei den verschiedenen Reaktionen entstehende Abgas ist, wenn es zum Entfernen der anorganischen Anteile, z.B. Halogen und Halogenwasserstoff, mit Wasser oder wäßriger Lauge gewaschen oder mit Wasserdampf gestrippt wurde, mit Wasserdampf gesättigt. Da auch Wasser von Aktivkohle adsorbiert wird, wird deren Beladungskapazität durch eine hohe Feuchtigkeit des Abgases verringert. Die Vielzahl der in dem Abgas vorhandenen Schadstoffe, die sich in ihrem Adsorptions-und Rückhalteverhalten stark voneinander unterscheiden, führt zu einer Mischadsorption. Dabei können Verdrängungseffekte auftreten. Beispielsweise werden Chloroform und Tetrachlorkohlenstoff durch die im Abgas vorhandenen höher siedenden Schadstoffe wie Chlortoluole und Chlorbenzochloride vom Adsorptionsmittel verdrängt.

Die beladenen Adsorbentien werden in der Regel mit Wasserdampf oder Heißluft regeneriert. Dabei werden die Schadstoffe desorbiert. Ein hohes Rückhaltevermögen erschwert die Desorption, da eine verbleibende Restbeladung des Adsorbens mit jeder Adsorptionsphase zu einer zunehmenden Verringerung der Adsorptionskapazität führt, denn die in dem zu reinigenden Abgas vorliegenden Schadstoffe mit hohem Siedepunkt lassen sich nur unter drastischen Bedingungen und teilweise unter Bildung von Zersetzungsprodukten desorbieren.

Ein Nachteil von Aktivkohlen ist, daß sie Metallionen enthalten und daher nicht inert sind. Z. B. enthalten sie Eisenionen, die eine katalytische Zersetzung von Chlor-und Bromaromaten bewirken und als Redoxmittel, z. B. $Fe^{III}$ zu $Fe^{II}$, reagieren können. In Gegenwart von Chlor kann Aktivkohle auch die Bildung von toxischen Nebenprodukten, z. B. Phosgen, katalysieren.

Ein wesentliches Problem der Reinigung von Abgasen durch Adsorption liegt auch in der Beherrschung der auftretenden Adsorptionswärme. Bei ungenügender Wärmeabfuhr neigen Aktivkohleanlagen zur Selbstentzündung. Allgemein beträgt die Adsorptionswärme etwa das 1,5fache der Verdampfungswärme.

Werden die Verunreinigungen der Abgase ohne Katalysatoren verbrannt, sollen die oxydierbaren organischen Verbindungen mit Luftsauerstoff bei Temperaturen bis 900°C in die umweltfreundlichen Stoffe Kohlendioxid und Wasser umgesetzt werden. Verbrennt man jedoch ein Abgas aus der Seitenketten-oder Kernhalogenierung oder Nitrierung, so fällt ein Halogen bzw. Stickoxyde enthaltendes Rauchgas an, das noch einem aufwendigen Waschprozeß unterzogen werden muß. Darüberhinaus besteht bei der Verbrennung die Gefahr der Bildung toxischer Nebenprodukte.

Bei der katalytischen Nachverbrennung findet die Verbrennung der Verunreinigungen des Abgases bei ca. 300 bis 600°C statt. Sie erfordert daher weniger Energie. Zur Reinigung von Halogenierungsabgasen können Edelmetallkatalysatoren jedoch nicht eingesetzt werden, da die Halogenverbindungen den Katalysator vergiften und zerstören. Spezielle Nichtedelmetallkatalysatoren sollen den Vorteil bieten, daß sie nicht durch Halogenverbindungen vergiftet werden. Diese Katalysatoren arbeiten einwandfrei in Temperaturbereichen zwischen 300°C und 600°C. Bei den Schwankungen in bezug auf Zusammensetzung und Konzentration der Schadstoffe im Abgasgemisch aus den verschiedenen Verfahren sind jedoch Überhitzungen über 600°C nicht zu vermeiden. Diese führen dann zur Zerstörung des Katalysators und der Meßfühler.

Will man Lösemittel aus Abgasen durch Tieftemperaturkondensation entfernen, wird das lösemittelhaltige Gas bis auf Temperaturen unterhalb des Taupunktes der abzuscheidenden Lösemittel abgekühlt. Um den Grenzwert der TA-Luft zu erreichen, muß das Abgas jedoch auf sehr tiefe Temperatur gekühlt werden, für Chloroform und Tetrachlorkohlenstoff bis unter -130°C, z. B. mit flüssigem Stickstoff. Das Abgas muß außerdem vorgetrocknet werden, um Vereisung zu vermeiden. Dieses Verfahren erfordert also einen hohen Energiebedarf und, wenn die Abgasgemische mehrere Lösemittel enthalten, eine aufwendige Destillation.

Bei der Reinigung von Abgasen durch Absorption ist zwischen chemischer und physikalischer Absorption zu unterscheiden. Bei der chemischen Absorption reagiert der aus dem Abgas zu entfernende Stoff mit der Waschflüssigkeit zu einer nicht oder kaum flüchtigen Verbindung. Dazu müssen sowohl die Verunreinigungen des Abgases als auch die Waschflüssigkeit entsprechend reaktionsfähig sein. Für die Reinigung des Abgases aus der Seitenkettenchlorierung bzw. -bromierung und Kernchlorierung bzw. -nitrierung ist sie nicht geeignet.

Für die physikalische Absorption sind von Bedeutung Aufnahmevermögen, Regenerierbarkeit, Siedeverhalten, Korrosionsverhalten, thermische Stabilität, physiologische Eigenschaften, Umweltverhalten wie biologische Abbaubarkeit, Neigung zum Schäumen, Selektivität, Verfügbarkeit und Preis der Waschflüssigkeit. In der Praxis werden Waschflüssigkeiten wie Wasser oder organische Flüssigkeiten verwendet, die nicht oder nur im vernachlässigbaren Maße mit den organischen Schadstoffen reagieren. An die Waschflüssigkeiten werden hohe Qualitätsanforderungen gestellt. Die ausgewaschenen Verbindungen reichern sich in der Waschflüssigkeit an und können aus dieser, z. B. durch Destillation oder Ausblasen mit Wasserdampf, entfernt werden. Als Absorber kommen Bodenkolonnen, Füllkörperkolonnen und spezielle Absorptionsmaschinen zum Einsatz.

Aus der GB-A 2061126 ist bekannt, Lösungsmitteldämpfe aromatischer Herkunft, beispielsweise Benzol, Toluol oder Xylol, aus einem Schutzgas wie Stickstoff durch Absorption an einer Waschflüssigkeit zu entfernen. Als Waschflüssigkeit wird hierbei ein aliphatisches Öl, das Paraffincharakter haben muß und einen Siedepunkt von mindestens 204°C aufweist, beispielsweise Kerosin, verwendet.

In speziellen Fällen der Reinigung von Abgasströmen, die bei der Kern- und Seitenkettenhalogenierung und der Nitrierung entstehen, scheidet aufgrund der vorliegenden, zum Teil aggressiven Schadstoffe, der wechselnden Zusammensetzungen, Konzentrationen und Volumenstrom-Mengen die Verwendung der allgemein bekannten Waschflüssigkeiten aus. Es muß auch damit gerechnet werden, daß durch exotherme Selbstzersetzung von Fluorierungs-, Chlorierungs-, Bromierungs- und Nitrierungsprodukten entstandene saure Spaltprodukte im Abgas vorliegen. Die Waschflüssigkeit muß außerdem bei den höheren, zur Desorption, z. B. von hochsiedenden Chlornitroaromaten, benötigten Temperaturen und beim Regenieren gute Stabilität besitzen und keine toxischen Sekundärprodukte bilden. Waschflüssigkeiten, die unter diesen Bedingungen zur Bildung von Peroxyden neigen, wie Polyglykoläther, sind nicht brauchbar.

Bei manchen chemischen Verfahren wird auch konzentrierte Schwefelsäure als Lösemittel und Waschflüssigkeit eingesetzt. Die Verwendung von Schwefelsäure ist jedoch an spezifische Bedingungen geknüpft. So sollte das Abgas keine Schadstoffe enthalten, die mit Schwefelsäure unter Bildung von festen Stoffen, wie Sulfurierungsprodukten, z. B. Toluolsulfonsäuren, reagieren. Überdies ist die Entsorgung der mit Halogenaromaten beladenen Schwefelsäure problematisch. Zur Aufarbeitung gebrauchter Schwefelsäuren darf z. B. der Chlorgehalt in Form von organischen oder anorganischen Chlorverbindungen im allgemeinen nicht über 1 Gew.-% Chlor liegen.

Aufgabe der vorliegenden Erfindung war daher die Abtrennung von organischen Bestandteilen, wie halogenierten und nitrierten Stoffen, z. B. Chlor-, Nitro- und/oder Chlornitroaromaten aus Abgasströmen, die bei der Herstellung von aromatischen Zwischenprodukten anfallen und z. B. die obengenannten Verunreinigungen und ein Trägergas wie Stickstoff enthalten.

EP 0 322 706 B1

Gegenstand der Erfindung ist ein Verfahren zur Abtrennung von organischen Bestandteilen aus Abgasen, die bei der Herstellung aromatischer Zwischenprodukte anfallen, durch Absorption mittels Waschflüssigkeiten, das dadurch gekennzeichnet ist, daß man das mit Schadstoffen belastete Abgas mit einer Waschflüssigkeit aus a) n-Paraffinkohlenwasserstoffen mit 10 bis 20, vorzugsweise im wesentlichen 12 bis 18 C-Atomen und einem nicht-paraffinischen Anteil von unter 5 Gew.-% oder b) Diisopropylnaphthalin bzw. einem Isomerengemisch verschiedener Diisopropylnaphthaline der Summenformel $C_{16}H_{20}$, wobei die Waschflüssigkeit ein mittleres Molekulargewicht von 210-215, einen Siedebereich von 290-300°C (DIN 51761) und einen Flammpunkt über 130°C (DIN 51758) aufweist, bei Temperaturen von 0 bis 50°C wäscht. Im allgemeinen beträgt der Gehalt an den verschiedenen Diisopropylnaphthalinen mindestens 98 Gew.-%, der Stockpunkt unter - 40°C (DIN 51583) und die kinematische Viskosität ca. 6 mm$^2$/s (bei 40°C) (DIN 51366).

Die ausgezeichneten Eigenschaften des Diisopropylnaphthalins als Absorptionsmittel für eine Vielzahl aromatischer Zwischenprodukte sind in seiner Struktur begründet. Als Naphthalin-Derivat mit verzweigten aliphatischen Substituenten ist die Verbindung mit den meisten aromatischen Zwischenprodukten und vielen Lösemitteln mischbar; ferner ist es, ebenso wie die Paraffine nicht mischbar mit Wasser. Beide Flüssigkeiten sind leicht zu handhaben, da sie praktisch geruchlos und toxikologisch unbedenklich sind. Ein weiterer großer Vorteil ist die gute Regenerierbarkeit und die thermische Stabilität. Die beladene Waschflüssigkeit läßt sich durch Destillation auf einfache Weise gut regenerieren, gegebenenfalls unter Druckverminderung.

Das erfindungsgemäße Verfahren eignet sich z.B. für Abgase, die Halogen- bzw. Halogennitroaromaten, insbesondere Chlor-, Nitro- und Chlornitroaromaten, in einer Menge von z.B. 1 bis 10 000 mg/m$^3$, meistens im Bereich von 50 bis 5000 mg/m$^3$ enthalten. Die Abgasmenge kann z.B. von 10 bis 2000 m$^3$/h, vorzugsweise von 30 bis 100 m$^3$/h variieren.

Die Paraffinwaschflüssigkeit besteht im wesentlichen aus n-Paraffinen. Sie hat zweckmäßig einen Schmelzpunkt von mindestens 0°C, wird jedoch bei einer solchen Temperatur angewendet, bei der sie flüssig ist. Der nicht-paraffinische Anteil liegt unter 5 Gew.-%. Ganz besonders vorteilhaft für den Wascheffekt sind Paraffingemische mit einer mittleren Kohlenstoffanzahl von 15, insbesondere mit einer Viskosität bei 30°C von 2,2 mPa•s.

Bei der praktischen Durchführung wird das Abgas zur Abtrennung der organischen Bestandteile zweckmäßig im Gegenstrom zur Waschflüssigkeit durch einen Absorber geleitet. Jedoch sind auch andere Arbeitsweisen möglich, wie das Durchleiten des Abgases von unten durch eine Schicht des flüssigen Diisopropylnaphthalins bzw. Paraffins. Die beladene Waschflüssigkeit läßt sich in einem Desorber von den gelösten Komponenten befreien, z. B. durch Destillation oder Druckverminderung. Die regenierte Waschflüssigkeit kann in den Absorber zurückgeführt und die Schadstoffe können durch Kondensation und gegebenenfalls durch zusätzliche Rektifikation abgetrennt werden. Absorption und Regenerierung der Waschflüssigkeit kann auch in getrennten Schritten diskontinuierlich erfolgen. Dieses Verfahren ist dann von Vorteil, wenn mehrere separat auftretende Gasströme gereinigt werden müssen.

Als Absorber und Desorber können übliche Vorrichtungen, z. B. Füllkörper- oder Bodenkolonnen, eingesetzt werden, ferner Wasserringpumpen, die mit Diisopropylnaphthalin bzw. dem Paraffin als Betriebsflüssigkeit beschickt werden. Die Waschflüssigkeit wird im Absorber auf einer Temperatur zwischen 0 und 50, zweckmäßig zwischen 10 und 40 und vorzugsweise zwischen 15 und 30°C gehalten. Die Desorption erfolgt im allgemeinen unter vermindertem Druck bei 0.1-10 kPa (1 bis 100 mbar), vorzugsweise 1-5 kPa (10 bis 50 mbar), und bei einer Temperatur von 100 bis 200°C, vorzugsweise 120 bis 160°C. Zulaufgeschwindigkeit und Umpumpmenge der Waschflüssigkeit in den Absorber werden entsprechend dem Reinheitsgehalt des zu waschenden Abgases eingestellt.

Die Schadstoffkonzentration im Abgas wird vor und nach der Wäsche z. B. durch gaschromatographische Analysen kontrolliert. Daraus wird der Absorptionsgrad nach folgender Formel bestimmt:

$$\text{Absorptionsgrad (\%)} = \frac{(c_x)_{\text{Rohgas}} - (c_x)_{\text{Reingas}}}{(c_x)_{\text{Rohgas}}} \times 100$$

Der Absorptionsgrad des Reingases soll zwischen 60 und 100 %, vorzugsweise zwischen 70 und 95 % liegen.

Die folgenden Beispiele sollen den Gegenstand der Erfindung näher erläutern.

4

**Beispiele 1 bis 5**

Ein bei der Seitenkettenchlorierung von Methylaromaten (Beispiele 1 bis 6) bzw. bei der Herstellung von Chlornitroaromaten (Beispiele 7 bis 11) anfallendes Abgas wurde kontinuierlich in einer Glasapparatur unter verschiedenen Bedingungen wie folgt gereinigt:

Aus einem Puffergefäß für die Waschflüssigkeit (Volumen 2 000 ml) wurden 1 bis 8 l/h auf 16 bis 26°C gekühltes n-Paraffin mit 12 bis 18 C-Atomen (Beispiele 1 bis 6) bzw. 1,2 bis 4,5 l/h auf 16 bis 26°C gekühltes Diisopropylnaphthalin (Beispiele 7 bis 11) von oben in einen Absorber so zulaufen gelassen, daß das Paraffin bzw. Diisopropylnaphthalin die in den Tabellen 1 und 2 angegebenen Temperaturen hatte. Der Absorber bestand aus einer vertikal aufgebauten, mit Raschig-Ringen gefüllten Waschkolonne (Höhe 500 mm; Durchmesser 30 mm; Durchmesser der Raschig-Ringe 6 mm; Füllgewicht 118 g). Das mit organischen Bestandteilen beladene Abgas wurde im Gegenstrom zur Waschflüssigkeit bei einer Durchflußgeschwindigkeit von 300 bis 1000 l/h (Beispiele 1 bis 6) bzw. 17,5 bis 550 l/h (Beispiele 7 bis 11) durch die Absorptionskolonne gesaugt. Das gereinigte Abgas trat am Kolonnenkopf aus. Das mit den Abgasinhaltsstoffen beladene Paraffin bzw. Diisopropylnaphthalin wurde am Boden der Kolonne in einem Auffanggefäß (Inhalt 1 l) gesammelt und über einen Wärmetauscher (Heiztemperatur 120°C) in einen Desorber gepumpt. Die Desorption der im Paraffin bzw. Diisopropylnaphthalin angereicherten organischen Verbindungen erfolgte durch Destillation bei einem Druck von 4 kPa (40 mbar) (Beispiele 1 bis 6) bzw. 5 kPa (50 mbar) (Beispiele 7 bis 11). Zur Trennung des Paraffins bzw. Diisopropylnaphthalins von den darin gelösten Abgasschadstoffen wurde eine Füllkörperdestillationskolonne der Höhe 600 mm und des Durchmessers 30 mm eingesetzt, die eine Metallgewebepackung (Sulzer-Laborpackung 275 x 29 mm) enthielt.

Das gereinigte Paraffin bzw. Diisopropylnaphthalin wurde über einen Kühler wieder in das jeweilige Vorratsgefäß zurückgepumpt.

In den Tabellen 1 und 2 sind die Versuchsdaten und Ergebnisse zusammengestellt.

Tabelle 1: Versuchsdaten und Ergebnisse der Abgas-Wäsche

| Beispiel | Durchflußmenge Abgas (1/h) | Paraffin (1/h) | Temperatur (°C) | Abgas-Absorptionsgrad (%) im Paraffin Chloroform | Tetrachlorkohlenstoff | Toluol | Fluortoluol | Perchloräthylen | Chlorbenzol | Chlortoluole |
|---|---|---|---|---|---|---|---|---|---|---|
| 1 | 300 | 1,0 | 22 | 74,0 | 92,3 | 94,4 | 92,3 | 97,8 | 100,0 | 95,1 |
| 2 | 400 | 3,2 | 34 | 80,0 | 92,8 | 92,3 | 90,7 | 100,0 | 94,1 | 98,7 |
| 3 | 400 | 1,0 | 23 | 69,4 | 81,1 | 90,0 | 91,4 | 94,7 | 90,1 | 91,3 |
| 4 | 600 | 1,0 | 22 | 66,7 | 91,1 | 87,5 | 86,6 | 91,7 | 87,3 | 90,0 |
| 5 | 800 | 1,0 | 23 | 65,3 | 85,8 | 86,7 | 83,4 | 90,0 | 79,5 | 81,2 |
| 6 | 1 000 | 1,0 | 23 | 63,0 | 73,9 | 76,0 | 84,1 | 85,7 | 69,4 | 66,3 |

$$\text{Absorptionsgrad } (\%) = \frac{(c_x)_{Rohgas} - (c_x)_{Reingas}}{(c_x)_{Rohgas}} \times 100$$

Patentansprüche

1. Verfahren zur Abtrennung von organischen Bestandteilen aus Abgasen, die bei der Herstellung aromatischer Zwischenprodukte anfallen, durch Absorption mittels Waschflüssigkeiten, dadurch gekenn-

Tabelle 2:     Versuchsdaten und Ergebnisse der Abgas-Wäsche

| Beispiel | Durchflußmenge | | Temperatur | Abgas-Absorptionsgrad (%) im Diisopropylnaphthalin | | | |
| --- | --- | --- | --- | --- | --- | --- | --- |
| | Abgas | Diisopropyl-naphthalin | | Chlor-toluole | Dichlor-benzole | Nitro-toluole | Chlor-nitrobenzole |
| | (l/h) | (l/h) | (°C) | | | | |
| 7 | 175 | 1,2 | 16 | 100 | 100 | 100 | 100 |
| 8 | 280 | 1,2 | 18 | 99,9 | 99,9 | 100 | 100 |
| 9 | 400 | 1,3 | 21 | 99,1 | 95,1 | 93,4 | 96,2 |
| 10 | 550 | 4,5 | 26 | 98,2 | 93,5 | 87,6 | 85,2 |
| 11 | 600 | 1,2 | 20 | 93,4 | 89,3 | 76,8 | 67,8 |

$$\text{Absorptionsgrad (\%)} = \frac{(c_x)_{Rohgas} - (c_x)_{Reingas}}{(c_x)_{Rohgas}} \times 100$$

zeichnet, daß man das mit Schadstoffen belastete Abgas mit einer Waschflüssigkeit aus

a) n-Paraffinkohlenwasserstoffen mit 10 bis 20 C-Atomen und einem nicht-paraffinischen Anteil von unter 5 Gew.-% oder

b) Diisopropylnaphthalin bzw. einem Isomerengemisch verschiedener Diisopropylnaphthaline der Summenformel $C_{16}H_{20}$, wobei die Waschflüssigkeit ein mittleres Molekulargewicht von 210-215, einen Siedebereich von 290 bis 300°C (DIN 51761) und einen Flammpunkt über 130°C (DIN 51758) aufweist,

bei Temperaturen von 0 bis 50°C wäscht.

2. Verfahren nach Anspruch 1, dadurch gekennzeichnet, daß die n-Paraffinkohlenwasserstoff-Flüssigkeit einen Schmelzpunkt von mindestens 0°C hat, jedoch bei einer solchen Temperatur angewendet wird, bei der sie flüssig ist, wobei die n-Paraffinkohlenwasserstoffe vorteilhaft im wesentlichen 12-18 C-Atome enthalten und vorzugsweise eine mittlere Kohlenstoffzahl von 15, insbesondere mit einer Viskosität bei 30°C von 2,2 mPa•s, haben.

3. Verfahren nach Anspruch 1, dadurch gekennzeichnet, daß der Gehalt an den verschiedenen Diisopropylnaphthalinen mindestens 98 Gew.-% beträgt und der Stockpunkt unter -40°C nach DIN 51583 liegt.

4. Verfahren nach Anspruch 1 oder 3, dadurch gekennzeichnet, daß das Diisopropylnaphthalin bzw. das Isomerengemisch eine kinematische Viskosität von ca. 6 mm²/s (bei 40°C) nach DIN 51366 nicht überschreitet.

5. Verfahren nach einem oder mehreren der Ansprüche 1 - 4, dadurch gekennzeichnet, daß die Temperatur der Waschflüssigkeit während der Absorption zwischen 10 und 40, vorzugsweise zwischen 15 und 30°C liegt.

6. Verfahren nach einem oder mehreren der Ansprüche 1 - 5, dadurch gekennzeichnet, daß das Abgas Halogen- bzw. Halogennitro-Aromaten in einer Menge bis zu 10 000, insbesondere von 50 - 5000 mg/m³ enthält.

7. Verfahren nach einem oder mehreren der Ansprüche 1 - 6, dadurch gekennzeichnet, daß die absorbierten Verunreinigungen aus der Waschflüssigkeit bei einem Druck von 0.1-10 kPa (1 - 100 mbar), vorzugsweise 1-5 kPa (10 - 50 mbar) desorbiert werden.

8. Verfahren nach einem oder mehreren der Ansprüche 1 - 7, dadurch gekennzeichnet, daß die absorbierten Verunreinigungen aus der Waschflüssigkeit bei einer Temperatur von 100 - 200°C, vorzugsweise von 120 - 160°C desorbiert werden.

**Claims**

1. A process for removing organic constituents from offgases produced in the preparation of aromatic intermediates, by absorption by means of washing liquids, which comprises washing the pollutant-containing offgas with a washing liquid comprising

a) n-paraffin hydrocarbons having 10 to 20 carbon atoms and having a non-paraffinic content of less than 5% by weight, or

b) diisopropylnaphthalene or an isomer mixture of various diisopropylnaphthalenes of the empirical formula $C_{16}H_{20}$, the washing liquid having a mean molecular weight of 210-215, a boiling range of from 290 to 300°C (DIN 51761) and a flash point of above 130°C (DIN 51758),

at temperatures of from 0 to 50°C.

2. The process as claimed in claim 1, wherein the n-paraffin hydrocarbon liquid has a melting point of at least 0°C, but is used at the temperature at which it is liquid, the n-paraffin hydrocarbon advantageously containing 12-18 carbon atoms and preferably having a mean carbon number of 15, in particular having a viscosity at 30°C of 2.2 mPa•s.

3. The process as claimed in claim 1, wherein the content of the various diisopropylnaphthalenes is at least 98% by weight, and the pour point measured in accordance with DIN 51583 is below -40°C.

**4.** The process as claimed in claim 1 or 3, wherein the diisopropylnaphthalene or the isomer mixture has a kinematic viscosity not exceeding about 6 mm$^2$/s (40 °C), measured in accordance with DIN 51366.

**5.** The process as claimed in one or more of claims 1 - 4, wherein the temperature of the washing liquid during the absorption is between 10 and 40 °C, preferably between 15 and 30 °C.

**6.** The process as claimed in one or more of claims 1 - 5, wherein the offgas contains haloaromatic compounds or halonitroaromatic compounds in an amount of up to 10,000 mg/m$^3$, in particular of 50 - 5000 mg/m$^3$.

**7.** The process as claimed in one or more of claims 1 - 6, wherein the absorbed impurities are desorbed from the washing liquid at a pressure of 0.1 - 10 kPa (1 - 100 mbar), preferably 1 - 5 kPa (10 - 50 mbar).

**8.** The process as claimed in one or more of claims 1 - 7, wherein the absorbed impurities are desorbed from the washing liquid at a temperature of 100 - 200 °C, preferably 120 - 160 °C.

**Revendications**

**1.** Procédé pour séparer des constituants organiques de gaz usés formés lors de la préparation de produits intermédiaires aromatiques, par absorption au moyen de liquides de lavage, procédé caractérisé en ce qu'on lave, à des températures de 0 à 50 °C, le gaz usé chargé de substances nuisibles avec un liquide de lavage constitué :

a) d'hydrocarbures n-paraffiniques contenant de 10 à 20 atomes de carbone et ayant une partie non paraffinique représentant moins de 5 % en poids,

ou

b) d'un di-isopropyl-naphtalène ou d'un mélange de différents di-isopropyl-naphtalènes isomères de formule brute C$_{16}$H$_{20}$, le liquide de lavage ayant une masse moléculaire moyenne de 210 à 215, un intervalle d'ébullition de 290 à 300 °C (DIN 51761) et un point de flamme supérieur à 130 °C (DIN 51758).

**2.** Procédé selon la revendication 1 caractérisé en ce que le liquide à base d'hydrocarbures n-paraffiniques a un point de fusion d'au moins 0 °C mais est utilisé à une température à laquelle il est liquide, les hydrocarbures n-paraffiniques contenant avantageusement, pour l'essentiel, de 12 à 18 atomes de carbone et ayant de préférence un nombre moyen d'atomes de carbone de 15, plus particulièrement avec une viscosité de 2,2 mPa.s à 30 °C.

**3.** Procédé selon la revendication 1 caractérisé en ce que la teneur en les différents di-isopropyl-naphtalènes est d'au moins 98 % en poids et le point de congélation est inférieur à -40 °C (selon la norme DIN 51583).

**4.** Procédé selon l'une des revendications 1 ou 3, caractérisé en ce que la viscosité cinématique du di-isopropyl-naphtalène, ou du mélange de di-isopropyl-naphtalènes isomères, ne dépasse pas environ 6 mm$^2$/s à 40 °C (selon la norme DIN 51366).

**5.** Procédé selon l'une quelconque des revendications 1 à 4, caractérisé en ce que la température du liquide de lavage au cours de l'absorption est comprise entre 10 et 40 °C, de préférence entre 15 et 30 °C.

**6.** Procédé selon l'une quelconque des revendications 1 à 5, caractérisé en ce que le gaz usé contient des composés aromatiques halogénés ou à la fois halogénés et nitrés en une quantité pouvant aller jusqu'à 10 000 mg/m$^3$, plus particulièrement en une quantité comprise entre 50 et 5 000 mg/m$^3$.

**7.** Procédé selon l'une quelconque des revendications 1 à 6, caractérisé en ce que les impuretés absorbées sont désorbées du liquide de lavage sous une pression comprise entre 0,1 et 10 kPa (soit 1 à 100 mbar), de préférence de 1 à 5 kPa (de 10 à 50 mbar).

8. Procédé selon l'une quelconque des revendications 1 à 7, caractérisé en ce que les composés absorbés sont désorbés du liquide de lavage à une température de 100 à 200 °C, de préférence de 120 à 160 °C.